# EUROPÄISCHE PATENTSCHRIFT

(11) **EP 1 950 128 B1**
(45) Veröffentlichungstag und Bekanntmachung des Hinweises auf die Patenterteilung: **02.12.2009**
(21) Anmeldenummer: 07024101.3
(22) Anmeldetag: 12.12.2007
(51) Int. Cl.: B62K 11/00

(54) **Motorrad**
Motorcycle
Motocyclette

(30) Priorität: 23.01.2007 DE 102007003291
(43) Veröffentlichungstag der Anmeldung: 30.07.2008
(73) Patentinhaber: Bayerische Motoren Werke Aktiengesellschaft, 80809 München (DE)
(72) Erfinder: Theobald, Markus, 85764 Unterschleissheim (DE)

(56) Entgegenhaltungen:
- EP-A- 0 879 755
- FR-A- 2 532 897
- JP-A- 2 070 587
- JP-A- 3 139 480
- JP-A- 2000 038 177
- JP-A- 2002 166 872
- JP-A- 2007 038 727

## Beschreibung

Die vorliegende Erfindung betrifft ein Motorrad gemäß dem Oberbegriff des Patentanspruches 1.

Ein derartiges Motorrad ist aus der JP-A-02070587 bekannt. Zum relevanten Stand der Technik gehört ferner die JP 2002 166 872.

Aufgabe der Erfindung ist es, ein Motorrad zu schaffen, bei dem die Fahrzeugbatterie an einer hinsichtlich der Gewichtsverteilung auf Vorder- und Hinterrad günstigen Position angeordnet ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Motorrad, mit einem Rahmen, der ein "Lenkkopfrohr" aufweist. An dem Lenkkopfrohr kann eine Vorderradgabel bzw. ein Vorderradträger unmittelbar oder mittelbar gelagert sein. Das als "Lenkkopfrohr" bezeichnete Rahmenteilstück braucht aber nicht unbedingt zur Lagerung einer Vorderradgabel oder eines Vorderradträgers vorgesehen sein. Ganz allgemein handelt es sich bei dem Lenkkopfrohr um einen vorzugsweise rohrförmigen Rahmenabschnitt, der sich bei aufrecht stehendem Motorrad von oben gesehen schräg nach vorne unten erstreckt und sich in einem Bereich befindet, der, in Fahrtrichtung gesehen, hinterhalb des Lenkers des Motorrads angeordnet ist.

Die Fahrzeugbatterie ist in unmittelbarer Nähe des Lenkkopfrohrs angeordnet. In Fahrtrichtung gesehen ist die Fahrzeugbatterie unmittelbar hinterhalb des Lenkkopfrohrs angeordnet, wobei hinterhalb auf der dem Fahrzeugheck zugewandten Seite des Lenkkopfrohrs bedeutet.

Im Lenkkopfrohr ist eine Ausnehmung oder eine Einbuchtung vorgesehen, in die die Fahrzeugbatterie hineinragt, was eine sehr Platz sparende Anordnung ermöglicht.

Eine in diesem Bereich, d h. relativ weit vorne und relativ weit oben, in der Nähe des Lenkers angeordnete Fahrzeugbatterie beeinflusst die Fahrdynamik und die Fahrstabilität des Motorrads positiv. Durch die Anordnung der Fahrzeugbatterien in diesem Bereich wird, im Vergleich zu herkömmlichen Motorrädern, das Hinterrad entlastet und das Vorderrad stärker belastet, was beim Anfahren den Vorteil hat, dass das Vorderrad nicht so weit ausfedert. Anders ausgedrückt befindet sich eine derart angeordnete Fahrzeugbatterie genau oder nahezu genau auf der Achse des idealen Anfahrnickausgleichs. Insbesondere wird dadurch beim starken Beschleunigen des Motorrads die Neigung zum Überschlagen nach hinten verringert und die Beschleunigungstraktion optimiert.

Die Anordnung der Fahrzeugbatterie in diesem Bereich ist mit geringem Montageaufwand verbunden: Die Batteriepole sind besser zugänglich als bei vielen herkömmlichen Batterieanordnungen. Ein weiterer Vorteil ist darin zu sehen, dass der Bereich in unmittelbarer Nähe des Lenkkopfrohrs relativ gut vor Verschmutzung geschützt ist.

Nach einer Weiterbildung der Erfindung weist der Rahmen mindestens ein oberes und mindestens ein unteres Rahmenrohr auf, deren vordere Enden mit dem Lenkkopfrohr verbunden sind. Die Fahrzeugbatterie kann im Bereich zwischen dem mindestens einen oberen und dem mindestens einen unteren Rahmenrohr angeordnet sein.

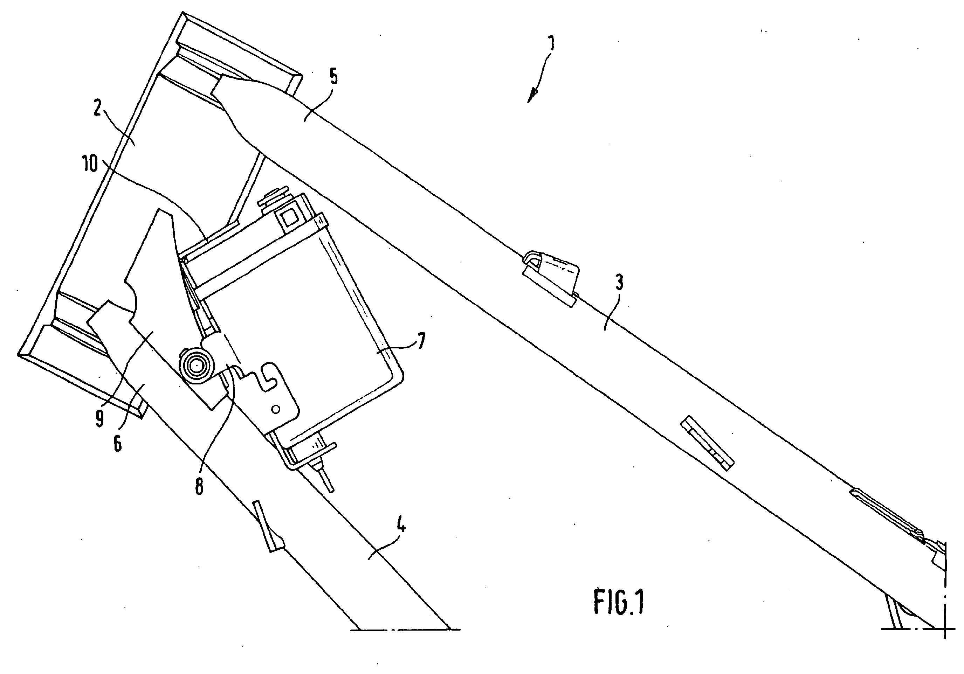

Im Folgenden wird die Erfindung im Zusammenhang mit der Zeichnung näher erläutert. Die einzige Figur 1 zeigt das Grundprinzip der Erfindung.

Figur 1 zeigt einen Motorradrahmen 1, der ein Lenkkopfohr 2 aufweist. Der Motorradrahmen 1 weist ferner ein oberes Rahmenrohr 3 und ein unteres Rahmenrohr 4 auf. Vordere Enden 5, 6 der beiden Rahmenrohre 3, 4 sind mit dem Lenkkopfrohr 2 verbunden, z. B. verschweißt, verlötet oder in anderer Weise dauerhaft fest verbunden. Im Bereich zwischen den beiden Rahmenrohren 3, 4 und hinterhalb des Lenkkopfrohrs 2 ist eine Fahrzeugbatterie 7 angeordnet. Die Fahrzeugbatterie 7 ist mittels eines Trägerblechs 8 befestigt. Das Trägerblech 8 ist bügelförmig gestaltet. Linke bzw. rechte Arme des Bügelblechs 8 sind mit Rahmenblechen verbunden, wobei in der hier gezeigten Seitenansicht lediglich ein Rahmenblech 9 zu sehen ist, das mit dem unteren Rahmenrohr und dem Lenkkopfrohr 2 verschweißt, verlötet oder in sonstiger Weise dauerhaft verbunden ist.

Wie aus Figur 1 ersichtlich ist, weist das Lenkkopfrohr einen Einschnitt bzw. eine Einbuchtung 10 auf, in die ein vorderes Ende der Fahrzeugbatterie 7 hineinragt, was den Vorteil hat, dass der Schwerpunkt der Fahrzeugbatterie sehr weit vorne in Bezug auf den Motorradrahmen liegt, was die Radlastverteilung des Motorrads günstig beeinflusst.

## Patentansprüche

1. Motorrad, mit
- einem Rahmen (1), der ein Lenkkopfrohr (2) aufweist, und
- einer Fahrzeugbatterie (7), wobei die Fahrzeugbatterie (7) in
unmittelbarer Nähe des Lenkkopfrohrs (2) angeordnet ist, wobei die Fahrzeugbatterie (7) auf einer einem Heck des Motorrads zugewandten Seite des Lenkkopfrohrs (2) angeordnet ist, **dadurch gekennzeichnet, dass** das Lenkkopfrohr (2) eine Ausnehmung bzw. Einbuchtung (10) aufweist und dass die Fahrzeugbatterie (7) in die Ausnehmung bzw. Einbuchtung (10) hineinragt.

2. Motorrad nach Anspruch 1, **dadurch gekennzeichnet, dass** der Rahmen (1) mindestens ein oberes Rahmenrohr (3) aufweist, dessen vorderes Ende (5) mit dem Lenkkopfrohr (2) verbunden ist, und mindestens ein unteres Rahmenrohr (4), dessen vorderes Ende (6) mit dem Lenkkopfrohr (2) verbunden ist und dass die Fahrzeugbatterie (7) im Bereich zwischen dem oberen und dem unteren Rahmenrohr (3, 4) angeordnet ist.

## Claims

1. A motorcycle comprising
- a frame (1) comprising a steering-head column (2) and
- a vehicle battery (7), wherein the battery (7) is disposed in the
immediate neighbourhood of the steering-head column (2), wherein the battery (7) is mounted on a side of the steering-head column (2) remote from a rear of the motorcycle, **characterised in that** the column (2) has a recess or niche (10) and the battery (7) projects into the recess or niche (10).

2. A motorcycle according to claim 1, **characterised in that** the frame (1) has at least one top tube (3) connected at its front end (5) to the column (2) and at least one bottom tube (4) connected at its front end (6) to the column (2), and the battery (7) is placed in the region between the top and the bottom tube (3, 4).

## Revendications

1. Motocycle comportant:
- un cadre (1) muni d'un tube de colonne de direction (2), et
- une batterie (7),
la batterie (7) du véhicule étant installée à proximité immédiate du tube (2) de la colonne de direction,
la batterie du véhicule (7) étant installée sur le côté arrière du tube (2) de la colonne de direction,
**caractérisé en ce que**
le tube (2) de la colonne de direction comporte une cavité ou un enfoncement (10), et
la batterie (7) pénètre dans la cavité ou l'enfoncement (10).

2. Motocycle selon la revendication 1,
**caractérisé en ce que**
le cadre (1) comporte au moins un tube supérieur (3) dont l'extrémité avant (5) est reliée au tube (2) de la colonne de direction et au moins un tube inférieur (4) dont l'extrémité avant (6) est reliée au tube (2) de la colonne de direction, et
la batterie (7) du véhicule se trouve dans la zone comprise entre le tube supérieur et le tube inférieur (3, 4) du cadre.
